Europäisches Patentamt

European Patent Office

Office européen des brevets

(19)

(11) Veröffentlichungsnummer: **0 101 813**
**A2**

(12) # EUROPÄISCHE PATENTANMELDUNG

(21) Anmeldenummer: 83106056.1

(22) Anmeldetag: 21.06.83

(51) Int. Cl.³: **C 04 B 37/02**
**C 03 C 27/04**

(30) Priorität: 02.07.82 DE 3224825

(43) Veröffentlichungstag der Anmeldung:
07.03.84 Patentblatt 84/10

(84) Benannte Vertragsstaaten:
AT BE CH DE FR GB IT LI LU NL SE

(71) Anmelder: SIEMENS AKTIENGESELLSCHAFT
Berlin und München Wittelsbacherplatz 2
D-8000 München 2(DE)

(72) Erfinder: Stockinger, Helga
Koempelstrasse 13
D-8133 Feldafing(DE)

(72) Erfinder: Röser, Klaus, Dr.
Jägerstrasse 18
D-8028 Taufkirchen(DE)

(54) Keramik-Kupferlötverbindungen.

(57) Zur Herstellung von vakuumdichten Glas- bzw. Keramik-Kupferlötverbindungen wird das Glas bzw. die Keramik mit einer Metallisierung versehen, auf die eine lötbare Schicht folgt, die keinen bzw. nur einen geringfügigen Angriff auf das Kupferteil auslöst. Hierzu eignet sich chemisch bzw. galvanisch abgeschiedenes Kupfer oder chemisch abgeschiedenes Nickel-Phosphor. Die Metallisierung kann aber auch zuerst galvanisch vernickelt werden.

EP 0 101 813 A2

0 1 0 1 8 1 3

SIEMENS AKTIENGESELLSCHAFT     Unser Zeichen

Berlin und München     VPA 82 P 1514 E

Keramik-Kupferlötverbindungen.

Die Erfindung betrifft ein Verfahren zur Herstellung von vakuumdichten Glas- bzw. Keramik-Kupfer-Lötverbindungen, wobei man das Glas bzw. die Keramik mit einer Metallisierung versieht.

Es ist bekannt, diese Metallisierung anschließend galvanisch zu vernickeln, um eine gute Lötbarkeit zu gewährleisten. Das Kupferteil wird dann mit einem kupfer- und silberhaltigen Vakuumhartlot an diesen Schichtenverbund angelötet. Bei derartigen Lötverbindungen wird das Kupferteil vom Lot bevorzugt entlang der Korngrenzen angelöst. Dieser Angriff auf das Kupferteil kann zu Undichtigkeiten führen.

Bisher wird mit einem Lötprozeß gearbeitet, bei dem die zu verbindenden Teile nur sehr kurz auf Löttemperatur gehalten werden, so daß der Angriff des Kupfers durch das Lot im allgemeinen nicht so stark ist. Eine ausreichende Fertigungssicherheit ist jedoch auch mit diesem Verfahren nicht gegeben.

Der Erfindung liegt die Aufgabe zugrunde, ein Verfahren zur Herstellung von vakuumdichten Glas- bzw. Keramik-Kupfer-Lötverbindungen zu konzipieren, bei dem dieser starke Angriff auf eine geringe flächenmäßige Anlösung bei den Lötbindungen reduziert bzw. vollkommen verhindert wird.

Wed 1 Plr/24.6.1982

Diese Aufgabe wird dadurch gelöst, daß auf die Metallisierung direkt eine lötbare Schicht aus chemisch bzw. galvanisch abgeschiedenem Kupfer aufgebracht und anschließend das Kupferteil mit einem Vakuumhartlot angelötet wird.

Im Rahmen der Erfindung kann jedoch die Metallisierung erst galvanisch vernickelt und dann eine lötbare Schicht aus chemisch bzw. galvanisch abgeschiedenem Kupfer aufgebracht werden, auf der das Kupferteil mit einem Vakuumhartlot angelötet wird..

Nach einer weiteren Ausgestaltung der Erfindung kann auf die Metallisierung eine lötbare Schicht aus chemisch abgeschiedenem Nickel-Phosphor aufgebracht werden.

Durch die Lösungen nach der Erfindung wird erreicht, daß mit hoher Fertigungssicherheit eine vakuumdichte Lötverbindung Glas- bzw. Keramik-Kupfer erzeugt werden kann.

3 Patentansprüche

Patentansprüche

1. Verfahren zur Herstellung von vakuumdichten Glas-
bzw. Keramik-Kupfer-Lötverbindungen, wobei man das Glas
bzw. die Keramik mit einer Metallisierung versieht,
d a d u r c h   g e k e n n z e i c h n e t , daß auf
die Metallisierung direkt eine lötbare Schicht aus
chemisch bzw. galvanisch abgeschiedenem Kupfer aufgebracht und anschließend das Kupferteil mit einem Vakuumhartlot angelötet wird.

2. Verfahren zur Herstellung von vakuumdichten Glas-
bzw. Keramik-Kupfer-Lötverbindungen, wobei man das Glas
bzw. die Keramik mit einer Metallisierung versieht, die
anschließend galvanisch vernickelt wird, d a d u r c h
g e k e n n z e i c h n e t , daß auf die Nickelschicht
eine lötbare Schicht aus chemisch bzw. galvanisch abgeschiedenem Kupfer aufgebracht und anschließend das
Kupferteil mit einem Vakuumhartlot angelötet wird.

3. Verfahren nach Anspruch 1, d a d u r c h   g e -
k e n n z e i c h n e t ,  daß auf die Metallisierung
chemisch abgeschiedenes Nickel-Phosphor aufgebracht
wird.